# EUROPÄISCHE PATENTSCHRIFT

(11) **EP 1 880 122 B1**
(45) Veröffentlichungstag und Bekanntmachung des Hinweises auf die Patenterteilung: **23.07.2008**
(21) Anmeldenummer: 06742596.7
(22) Anmeldetag: 18.04.2006
(51) Int. Cl.: F16H 37/04, F16H 3/54, F16H 3/78

(54) **SCHALTANORDNUNG FÜR EINE IN PLANETENBAUWEISE AUSGEFÜHRTE NACHSCHALT-GRUPPE EINES MEHRGRUPPENGETRIEBES**
SHIFTING DEVICE FOR A DOWNSTREAM PLANETARY GROUP OF A COMPOUNDED TRANSMISSION
DISPOSITIF DE COMMUTATION POUR UN GROUPE PLANETAIRE AVAL D'UNE TRANSMISSION COMPOSEE

(30) Priorität: 11.05.2005 DE 102005021698
(43) Veröffentlichungstag der Anmeldung: 23.01.2008
(73) Patentinhaber: ZF FRIEDRICHSHAFEN AG, 88038 Friedrichshafen (DE)
(72) Erfinder: RENNER, Stefan, 78351 Bodman-Ludwigshafen (DE); BADER, Josef, 88045 Friedrichshafen (DE)
(86) Internationale Anmeldenummer: PCT/EP2006/003510
(87) Internationale Veröffentlichungsnummer: WO 2006/119842

(56) Entgegenhaltungen:
- EP-A- 0 437 663
- EP-A- 0 916 872
- DE-A1- 4 434 512
- DE-A1- 19 801 477
- US-A- 4 063 470
- US-A1- 2005 009 660
- PATENT ABSTRACTS OF JAPAN Bd. 018, Nr. 446 (M-1659), 19. August 1994 (1994-08-19) -& JP 06 137388 A (HINO MOTORS LTD), 17. Mai 1994 (1994-05-17)

## Beschreibung

Die vorliegende Erfindung betrifft eine Schaltungsanordnung für eine in Planetenbauweise ausgeführte Nachschalt-Gruppe eines Mehrgruppengetriebes gemäß dem Oberbegriff des Patentanspruchs 1. Eine Solche Schaltungsanordnung ist aus der US 4 063 470 A1 bekannt.

Nachschalt-Gruppen, auch Bereichsgetriebe genannt, sind einem Grundgetriebe nachgeschaltet und ermöglichen den Betrieb eines Kraftfahrzeugs in zwei unterschiedlichen Übersetzungs- bzw. Geschwindigkeitsbereichen.

Aus der DE 41 21 709 A1 der Anmelderin ist ein Bereichsgetriebe für Kraftfahrzeuge bekannt, welches als Planetengetriebe mit einem drehfest auf einer Abtriebswelle eines Grundgetriebes angeordneten Sonnenrad, einem drehfest mit einer Abtriebswelle des Bereichsgetriebes verbundenen Steg und einem Hohlrad, das in einer ins Langsame übersetzten Schaltstufe des Bereichsgetriebes über eine erste Schaltkupplung mit dem Getriebegehäuse verbindbar ist, ausgebildet ist. Dieses Getriebe umfasst eine zweite, gemeinsam mit der ersten betätigbare Schaltkupplung, welche bei geöffneter erster Schaltkupplung den Steg mit der Ausgangswelle des Grundgetriebes verbindet.

Des weiteren ist aus der DE 198 01 477 A1 der Anmelderin ein Bereichsgetriebe bekannt, das aus einem Planetengetriebe mit einem Sonnenrad, einem mit der Abtriebswelle des Planetengetriebes verbundenen Planetenträger und einem Hohlrad besteht. Hierbei ist das Hohlrad über ein Koppelglied mit einer Schiebemuffe verbunden, welche eine Innenverzahnung und eine Außenverzahnung aufweist, wobei die Außenverzahnung über das Koppelglied ständig drehfest mit dem Hohlrad verbunden ist.

Bei den aus dem Stand der Technik bekannten Schaltungsanordnungen für eine in Planetenbauweise ausgeführte Nachschalt-Gruppe eines Mehrgruppengetriebes, die eine außenliegende Schaltmuffe mit Schaltgabeleingriff aufweisen, bei denen der schmal ausgeführte Hohlradträger von außen in die Außenverzahnung der Schaltmuffe eingreift und die Muffeninnenverzahnung in die separat ausgeführte Kupplungskörperverzahnung eingreift, entsteht der Nachteil einer relativ langen Bauweise sowie der Notwendigkeit von separaten Kupplungskörpern.

Der vorliegenden Erfindung liegt die Aufgabe zugrunde, eine Schaltungsanordnung für eine in Planetenbauweise ausgeführte Nachschalt-Gruppe eines Mehrgruppengetriebes anzugeben, bei der keine Innenverzahnung in der Schaltmuffe erforderlich ist. Des weiteren sollen bei einer Klauenschaltung keine Kupplungskörper erforderlich sein.

Diese Aufgabe wird durch die Merkmale des Patentanspruchs 1 gelöst. Weitere erfindungsgemäße Ausgestaltungen und Vorteile gehen aus dem Unteranspruch hervor.

Demnach wird eine Schaltungsanordnung für eine in Planetenbauweise ausgeführte Nachschalt-Gruppe eines Mehrgruppengetriebes vorgeschlagen, deren Sonnenrad mit der Antriebswelle und deren Planetenträger mit der Abtriebswelle drehfest verbunden ist, bei der die Kupplungsverzahnung im Planetenträger der Nachschalt-Gruppe und in der Abstützplatte der Nachschalt-Gruppe integriert ist, so dass in vorteilhafter Weise bei einer Klauenschaltung keine Kupplungskörper benötigt werden.

Hierbei ist die Hohlradträgerverzahnung im Vergleich zum Stand der Technik breit ausgeführt und greift von außen in die Außenverzahnung der Schaltmuffe ein. Dies resultiert in einer stabilen Anordnung und einer guten Führung für die Schaltmuffe.

Gemäß der Erfindung ist die Gleitsteinmitnahme im Innendurchmesser der Schaltmuffe vorgesehen, so dass eine kürzere Bauweise ermöglicht wird. Durch diese Konzeption entfällt die Notwendigkeit einer Innenverzahnung in der Schaltmuffe.

Für die ins Langsame übersetzte Schaltstufe der Nachschalt-Gruppe wird vorzugsweise das Hohlrad des Planetengetriebes lösbar an das Getriebegehäuse gekoppelt, so dass die Abtriebswelle eine geringere Drehzahl als die Antriebswelle aufweist. In der schnellen Schaltstufe erfolgt ein direkter Durchtrieb von der Antriebswelle auf die Abtriebswelle, wobei in diesem Fall über die Kupplung eine Verbindung zwischen dem Hohlrad und dem Planetenträger hergestellt wird.

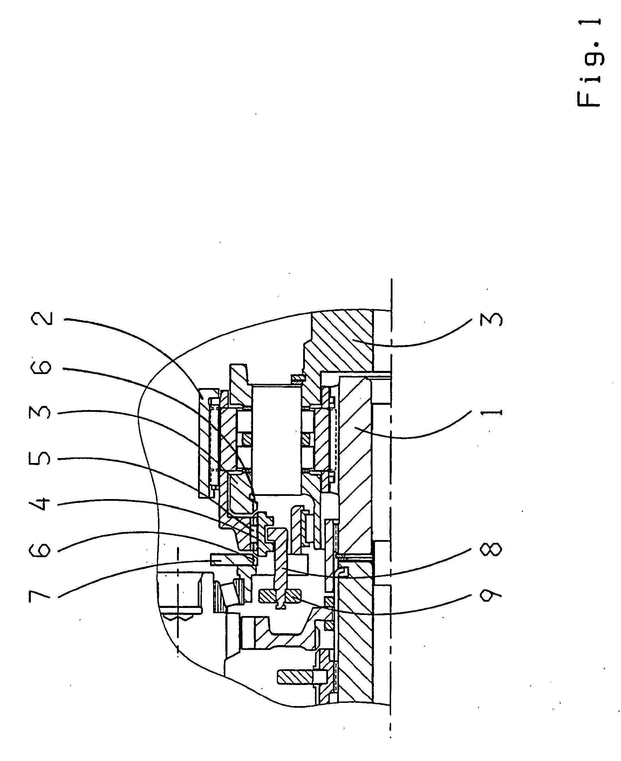

Die Erfindung wird im Folgenden anhand der beigefügten Fig. 1, welche eine schematische Schnittansicht der erfindungsgemäßen Schaltungsanordnung darstellt, beispielhaft näher erläutert.

In der Fig. 1 ist eine in Planetenbauweise ausgeführte Nachschalt-Gruppe eines Mehrgruppengetriebes, umfassend ein Sonnenrad 1, ein Hohlrad 2 und einen Planetenträger 3, dargestellt. Das Sonnenrad 1 ist mit einer nicht dargestellten Antriebswelle drehfest verbunden und der Planetenträger 3 ist mit der Abtriebswelle der Nachschalt-Gruppe drehfest verbunden.

Als Schalteinrichtung zur Änderung der Übersetzung ins Schnelle oder ins Langsame ist eine Schaltmuffe 4 vorgesehen, in die in eine Außenverzahnung gemäß der Erfindung eine breite Hohlradträgerverzahnung 5 von außen eingreift. Des weiteren ist die Kupplungsverzahnung 6 im Planetenträger 3 und in der Abstützplatte 7 der Nachschalt-Gruppe integriert.

Wie zudem aus der Fig. 1 ersichtlich, ist die Mitnahme des Gleitsteins 8 im Innendurchmesser der Schaltmuffe 4 vorgesehen, so dass eine kürzere Bauweise ermöglicht wird; die Schaltgabel ist mit dem Bezugszeichen 9 versehen.

Selbstverständlich fällt auch jede konstruktive Ausbildung, insbesondere jede räumliche Anordnung der Komponenten der erfindungsgemäßen Schaltungsanordnung an sich sowie zueinander und soweit technisch sinnvoll, unter den Schutzumfang der vorliegenden Ansprüche, ohne die Funktion der Schaltungsanordnung, wie sie in den Ansprüchen angegeben ist, zu beeinflussen, auch wenn diese Ausbildungen nicht explizit in der Fig. 1 oder in der Beschreibung dargestellt sind.

### Bezugszeichen

- 1: Sonnenrad
- 2: Hohlrad
- 3: Planetenträger
- 4: Schaltmuffe
- 5: Hohlradträgerverzahnung
- 6: Kupplungsverzahnung
- 7: Abstützplatte
- 8: Gleitstein
- 9: Schaltgabel

## Patentansprüche

1. Schaltungsanordnung für eine in Planetenbauweise ausgeführte Nachschalt-Gruppe eines Mehrgruppengetriebes, deren Sonnenrad (1) mit einer Antriebswelle und deren Planetenträger (3) mit einer Abtriebswelle drehfest verbunden ist, umfassend eine Schaltmuffe (4) und Kupplungsverzahnungen (6), die im Planetenträger (3) und in einer Abstützplatte (7) der Nachschalt-Gruppe integrierbar sind, **dadurch gekennzeichnet, dass** die Mitnahme eines die Schaltmuffe betätigenden Gleitsteins (8) im Innendurchmesser der Schaltmuffe (4) vorgesehen ist.

2. Schaltungsanordnung für eine in Planetenbauweise ausgeführte Nachschalt-Gruppe eines Mehrgruppengetriebes nach Anspruch 1, **dadurch gekennzeichnet, dass** eine Hohlradträgerverzahnung (5) von außen in eine Außenverzahnung der Schaltmuffe (4) eingreift.

## Claims

1. Shift system configuration for a planetary-type rear-mounted unit of a multiple range-change transmission, the center gear (1) of which is nonrotationally connected to an input shaft and the planet carrier (3) of which is nonrotationally connected to an output shaft, comprising a shifting sleeve (4) and clutch gearing (6), which can be integrated in the planet carrier (3) and a supporting plate (7) of the rear-mounted unit, **characterized in that** engagement of a sliding-sleeve-actuating sliding block (8) in the inner diameter of the sliding sleeve (4) is intended.

2. Shift system configuration for a planetary-type rear-mounted unit of a multiple range-change transmission according to claim 1, **characterized in that** an internal gear (5) externally engages with an external gearing of the sliding sleeve (4).

## Revendications

1. Dispositif de commutation pour un groupe-relais épicycloïdal monté en aval d'une transmission multi-groupe, dont le pignon planétaire (1) est lié solidaire en rotation à un arbre d'entrée et dont l'arbre porte-satellites (3) est lié solidaire en rotation à un arbre de sortie, comprenant un manchon (4) et des dentures d'embrayage (6), qui peuvent être intégrés dans l'arbre porte-satellites (3) et dans une plaque d'appui (7) du groupe-relais épicycloïdal monté en aval, **caractérisé en ce que** l'entraînement d'un patin (8) actionnant le manchon est prévu dans le diamètre intérieur du manchon (4).

2. Dispositif de commutation pour un groupe-relais épicycloïdal monté en aval d'une transmission multi-groupe selon la revendication 1 **caractérisé en ce que** une denture d'un porte-couronne (5) engrène par l'extérieur dans une denture extérieure du manchon (4).
